# EUROPEAN PATENT SPECIFICATION

(11) **EP 4 682 322 B1**
(45) Date of publication and mention of the grant of the patent: **04.11.2026**
(21) Application number: 25189800.3
(22) Date of filing: 16.07.2025
(51) Int. Cl.: E03D 11/14, E03C 1/322, E03C 1/324, E04C 3/04, F16B 7/04

(54) **WALL FASTENING DEVICE FOR SUSPENDED SANITARY BOWLS**
WANDBEFESTIGUNGSVORRICHTUNG FÜR HÄNGENDE SANITÄRBECKEN
DISPOSITIF DE FIXATION MURALE POUR CUVETTES SANITAIRES SUSPENDUES

(30) Priority: 17.07.2024 IT 202400016564
(43) Date of publication of application: 21.01.2026
(73) Proprietor: Ceramica Catalano S.p.A., 01034 Fabrica di Roma (VT) (IT)
(72) Inventor: Petroni, Franco, 01034 Fabrica di Roma (VT) (IT); Ceccarelli, Raffaele, 01015 Sutri (VT) (IT); Giorgi, Giovanni, 01032 Caprarola (VT) (IT); Sneider, Francesco Maria, 00196 Roma (RM) (IT)
(74) Representative: Praxi Intellectual Property Milano

(56) References cited:
- EP-A1- 2 657 417
- EP-A1- 4 067 586
- EP-B1- 2 215 312
- BE-A- 443 913
- FR-A1- 2 257 745
- GB-A- 1 005 686
- US-A- 3 228 037
- US-B2- 10 895 070

## Description

### BACKGROUND OF THE INVENTION

The present invention refers to a device for wall fastening of so-called "suspended" sanitary bowls, that is, sanitary bowls that do not rest on the floor of the room in which they are installed, but are raised at a certain height from the floor and are fixed cantilevered to a wall of the room.

In the installation of the sanitary bowls of the aforementioned type it is fundamental to guarantee that the sanitary bowl is firmly anchored to the wall from which it is suspended. In the art are known various fastening devices that allow the wall installation of a suspended sanitary bowl, however generally these fastening devices are not convenient to employ, nor particularly effective in providing an easy and precise positioning of the sanitary bowl.

EP 2 215 312 B1 concerns a support device for sanitary articles having a slide and a main body in the form of a single body.

BE 443 913 A describes a support for ceramic washbasins.

EP 2 657 417 A1 discloses a fastening system for sanitary articles, in particular WCs or bidets.

EP 4 067 586 A1 concerns a wall fastening system for sanitary elements.

FR 2 257 745 A1 illustrates a support and fastening frame for washbasins.

GB 1 005 686 A describes a pedestal for the fastening of a washbasin.

US 10 895 070 B2 discloses a WC support provided with a shaped waste pipe.

US 3 228 037 A discloses a fastening bracket for the wall support of sanitary articles.

### SUMMARY OF THE INVENTION

To solve the above-mentioned problem, the present invention aims at providing a device that allows a simpler and more rapid, as well as precise, wall installation of a suspended sanitary bowl.

More in particular, according to the present invention, this object is achieved with the wall fastening device for a suspended sanitary bowl, as characterized in claim 1. Preferred embodiments of the invention result from the remaining claims.

Thanks to the device of the invention, the operations for wall fastening a sanitary bowl are made simpler, more rapid and safer compared to the solutions of the prior art.

### BRIEF DESCRIPTION OF THE DRAWINGS

These and other objects, advantages and characteristics of the device according to the present invention will result more evident from the following detailed description of a preferred embodiment thereof, illustrated by way of example, but not limited to, in the attached drawings, in which:
- Fig. 1 illustrates in perspective view the fastening device according to the invention;
- Fig. 2 illustrates in perspective view the anchoring support of the fastening device of Fig. 1;
- Figs. 3 and 4 are exploded perspective views of the fastening device of Fig. 1;
- Fig. 5 is a perspective and exploded view of the fastening device according to the invention applied to a sanitary bowl adapted for wall fastening; and
- Figs. 6A, 6B and 6C schematically show the installation phases of a sanitary bowl by means of the fastening device of Fig. 1.

### DETAILED DESCRIPTION OF PREFERRED EMBODIMENTS

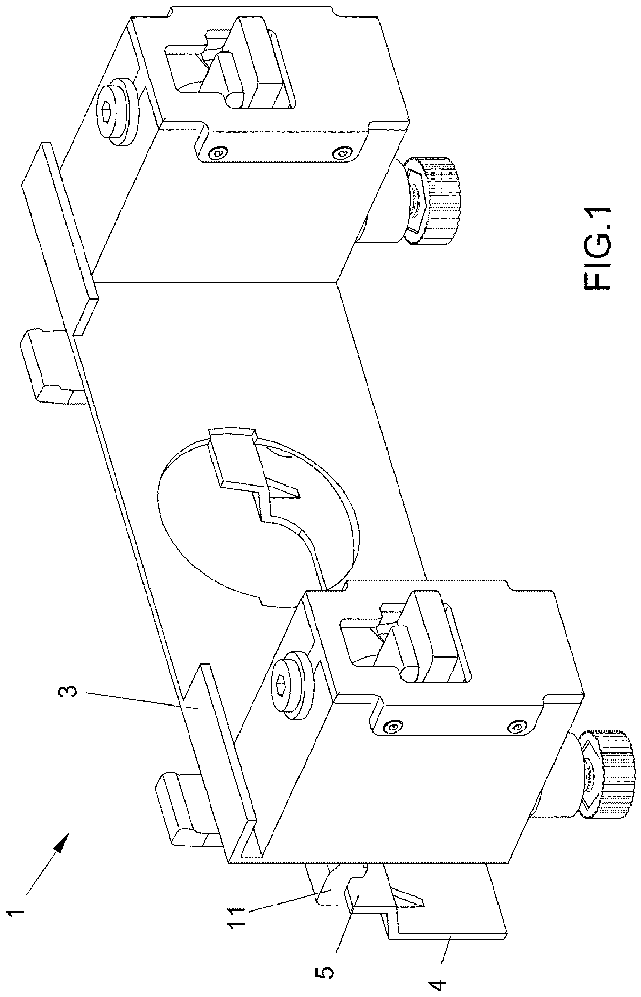

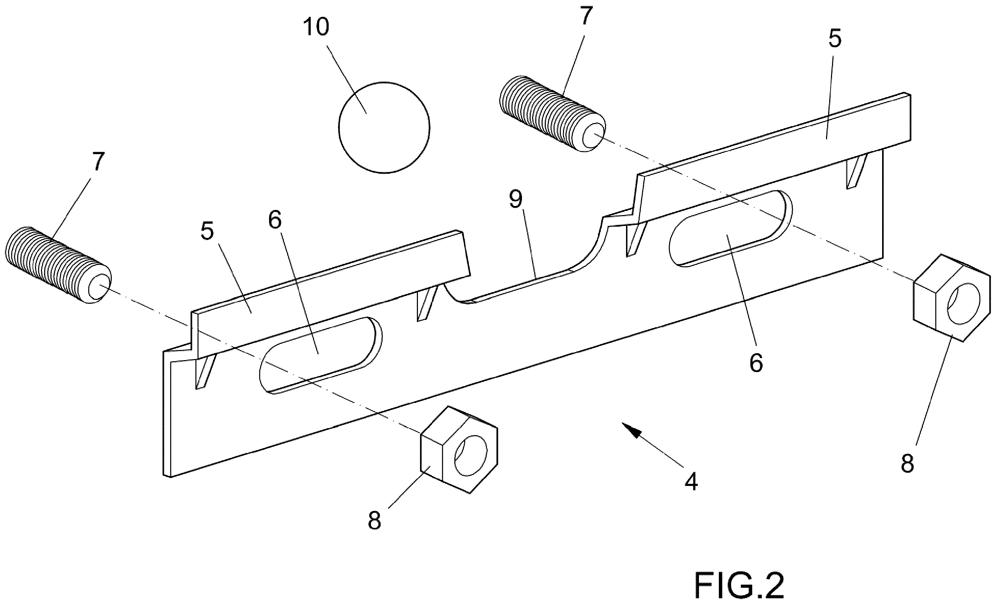

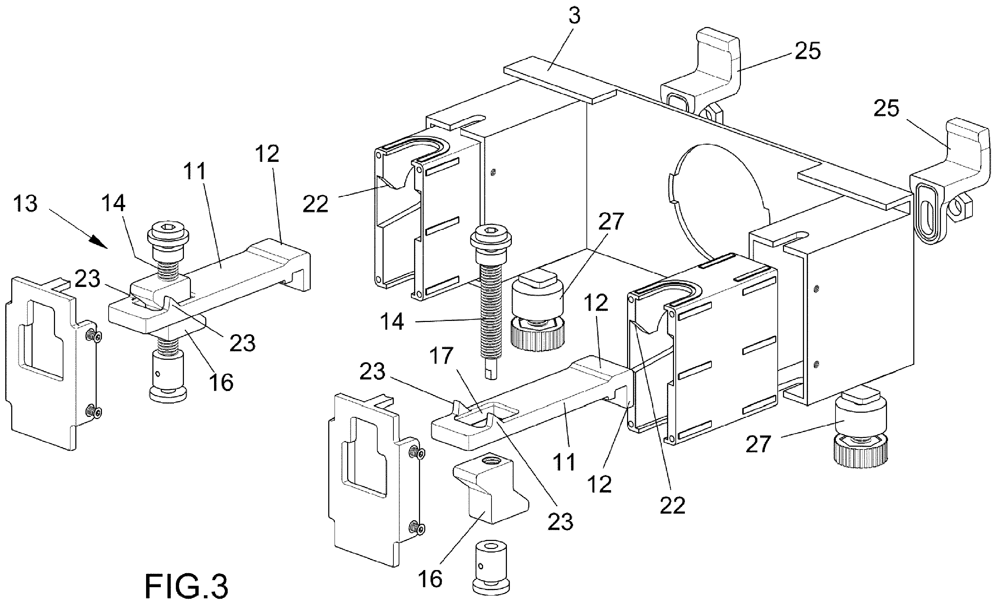

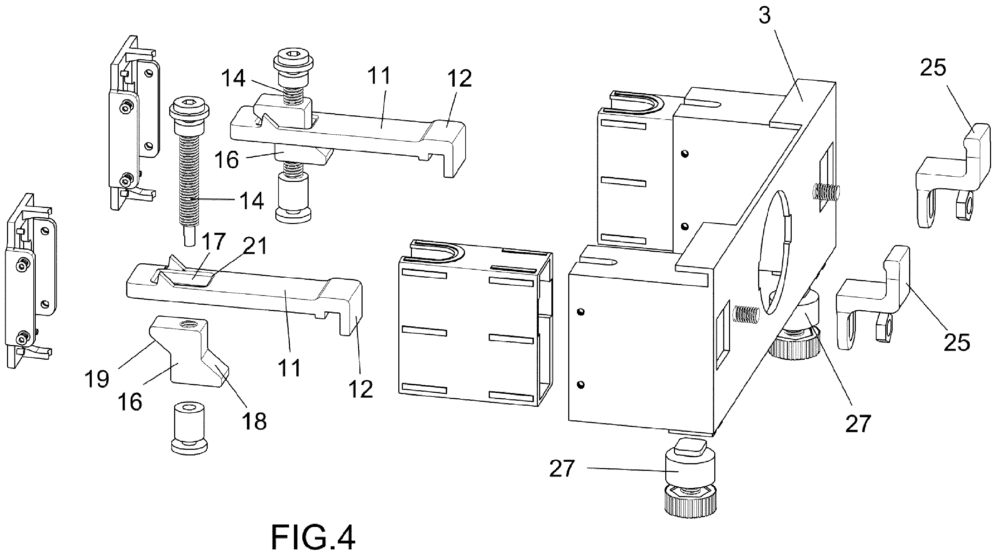

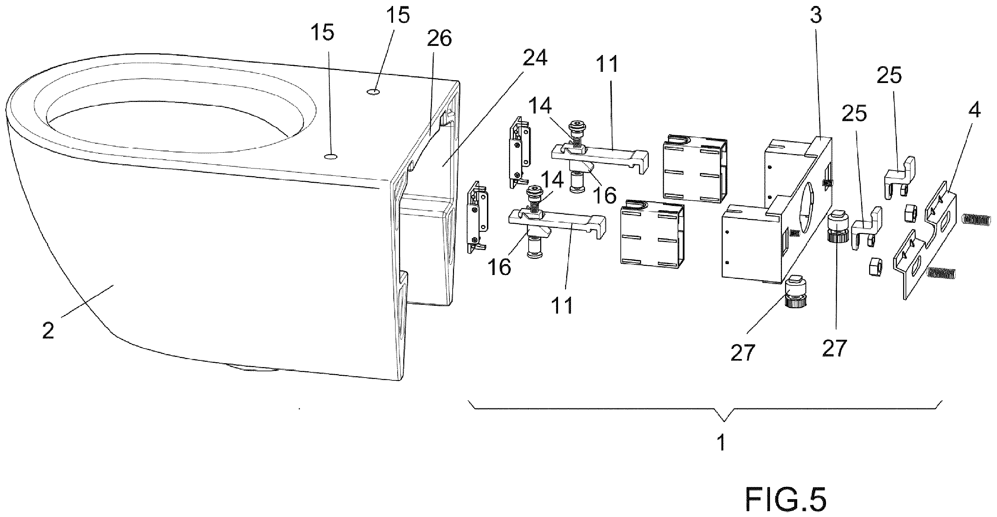

Making reference initially to Figs. 1-5 of the drawings, in them is illustrated a preferred embodiment of the fastening device according to the present invention, indicated as a whole with 1. The fastening device 1 is conceived to allow the wall installation of a suspended sanitary bowl 2 and comprises, for such purpose, a frame 3 adapted to be installed on a sanitary bowl 2 and an anchoring support 4 for said frame 3 intended to be fixed to a mounting wall (not shown) to support the sanitary bowl 2 cantilevered from said wall.

The anchoring support 4 consists of a shaped plate having a pair of projecting anchoring flanges 5 on which the frame 3 is engageable, as will be illustrated in greater detail in the following. The plate forming the anchoring support 4 is provided with slots 6 suitable to receive appropriate screw studs 7 protruding from the mounting wall and on which hexagonal nuts 8 are screwable to firmly fix the anchoring support 4 to the mounting wall of the sanitary bowl 2. The presence of the slots 6 advantageously allows to be able to compensate possible variations of the center-to-center distance between the screw studs 7 on the installation wall of the sanitary bowl 2. Obviously, the wall fastening of the anchoring support 4 can be carried out with different means, technically equivalent to those described above, provided they are capable of providing a safe and adjustable fastening of the anchoring support 4 to the mounting wall of the sanitary bowl 2.

On the anchoring support 4, in an intermediate position between the pair of anchoring flanges 5, an undercut 9 is conveniently realized which allows the connection with a water inlet tube 10 and a washing conduit (not illustrated) of the sanitary bowl 2.

**In** order to allow the anchoring of the frame 3 on the anchoring support 4, the frame 3 is provided with a pair of gripping arms 11 each having an end part 12 bent substantially in an inverted "L" to be able to engage to a corresponding anchoring flange 5 of the anchoring support 4. Each gripping arm 11 is connected to the frame 3 in such a way as to be reversibly movable from a release position to a gripping position in which said gripping arm 11 is firmly anchored to the anchoring support 4.

In order to carry out the reversible displacement of the gripping arms 11 from the release position to the gripping position, on the frame 3 are provided actuating means 13 constituted by a screw-threaded nut mechanism. The screw 14 of such mechanism is operable by means of an appropriate tool passed through the usual fastening holes 15 of the hinges of the seat of the sanitary bowl 2 or other holes provided for this purpose on the sanitary bowl 2, while the threaded nut 16 is operatively interconnected with an opening 17 in the gripping arm 11 and is equipped with inclined surfaces 18, 19 which, sliding in contact with opposite beveled edges 20, 21 of said opening 17, are suitable to impart to the corresponding gripping arm 11 a forward and backward displacement along the direction of its longitudinal axis.

The frame 3 is provided, furthermore, with guide surfaces 22 and each gripping arm 11 is equipped with projections 23 cooperating with the guide surfaces 22 on the frame 3 to determine a coupling rotation and, respectively, a decoupling rotation of the gripping arm 11 with the corresponding anchoring flange 5, as will be described in greater detail in the following.

The frame 3 is configured in such a way as to be able to be placed firmly inside a suitable housing compartment 24 obtained on the back of the sanitary bowl 2. To fix in position the frame 3 inside the housing compartment 24 there can be provided clamps 25 that lock the frame 3 on a rear crossbeam 26 of the sanitary bowl 2. Conveniently, the frame 3 can be provided with height-adjustable feet 27 to allow the correct positioning of the frame 3 inside its housing compartment 24 in the sanitary bowl 2. By the height adjustment of the feet 27 it is possible to position the frame 3 in a precise way along the vertical axis in its housing compartment 24 inside the sanitary bowl 2 and thus realize an interlocking fastening that is capable of supporting the sanitary bowl 2 absorbing high forces.

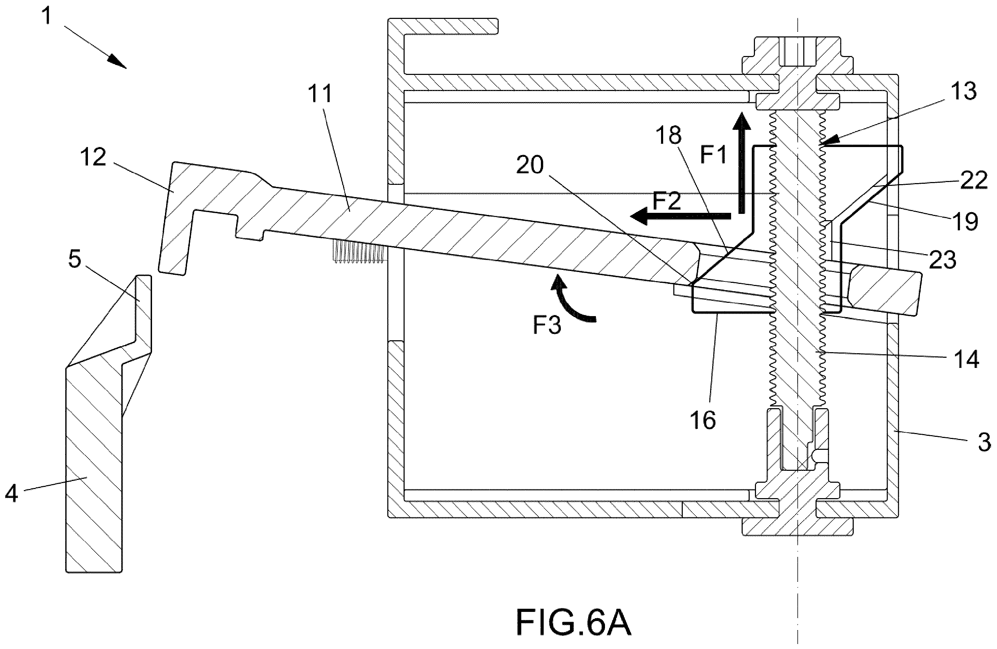

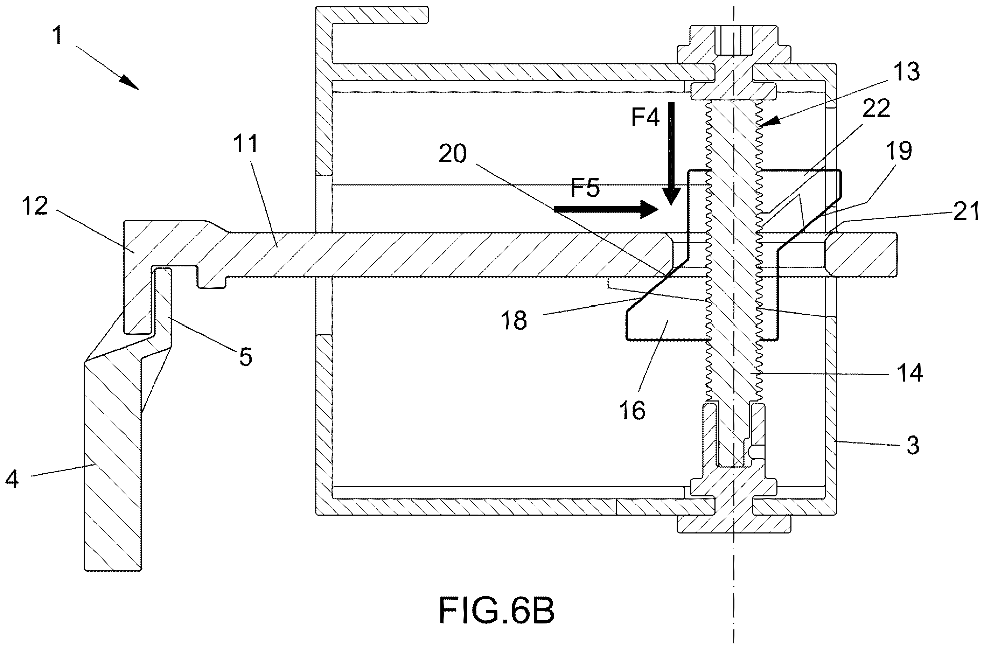

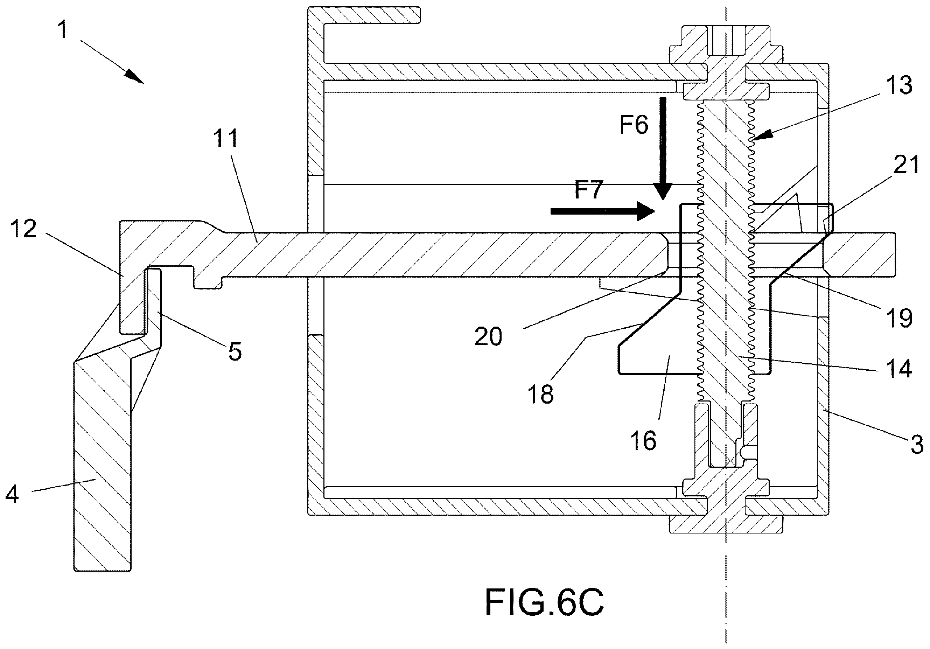

After having fixed the frame 3 to the sanitary bowl 2 it is possible to proceed with the installation of the latter on a mounting wall on which the anchoring support 4 has been previously applied. The installation phases are schematically shown in Figs. 6A, 6B, and 6C of the drawings in which, for simplicity of representation, are illustrated only the frame 3, with one of the gripping arms 11 and the corresponding actuator 13, and the wall-mounted anchoring support 4.

In the first phase (Fig. 6A), the installer operates on the screw-threaded nut mechanism of each actuator 13 to lift the threaded nut 16, as indicated by the arrow F1. During the upward stroke of the threaded nut 16, the inclined surface 18 of the threaded nut 16 slides in contact with the lower beveled edge 20 of the opening 17 in the gripping arm 11 determining a forward displacement of the gripping arm 11, that is, toward the anchoring support 4, as indicated by the arrow F2. While the gripping arm 11 is displaced forward, the projections 23 on the gripping arm 11 slide in contact with the guide surfaces 22 on the frame 3 determining a clockwise rotation of the gripping arm 11, indicated by the arrow F3, which has the effect of lifting the end part 12 of the gripping arm 11 to allow the coupling with the anchoring flange 5 of the anchoring support 4.

In the second phase (Fig. 6B), the installer moves the sanitary bowl 2 toward the wall anchoring support 4 to bring the end part 12 of the gripping arm beyond the anchoring flange 5 and operates again on the screw-threaded nut mechanism of each of the actuators 13 to lower the threaded nut 16, as indicated by the arrow F4. During the downward stroke of the threaded nut 16, the inclined surface 18 of the threaded nut 16 slides in contact with the lower beveled edge 20 of the opening 17 in the gripping arm 11 determining a backward movement of the gripping arm 11, as indicated by the arrow F5 and, at the same time, a counterclockwise rotation of the gripping arm 11 which has the effect of lowering the end part 12 of the gripping arm 11 to allow the engagement with the anchoring flange 5 of the anchoring support 4. Once the two gripping arms 11 are engaged to the wall-fixed anchoring support 4, the water inlet mouth in the sanitary bowl 2 and the drain tube (siphon) present on the sanitary bowl 2 will result conveniently aligned with the corresponding hydraulic fitting element present on the wall, thus making very simple to finalize the hydraulic connections of inlet and drain.

In the third and last phase (Fig. 6C), the installer operates again on the screw-threaded nut mechanism of each of the actuators 13 to further lower the threaded nut 16, as indicated by the arrow F6. During the downward stroke of the threaded nut 16, the inclined surface 19 of the threaded nut 16 slides in contact with the upper beveled edge 21 of the opening 17 in the gripping arm 11 determining a further backward displacement of the gripping arm 11 against the anchoring flange 5, as indicated by the arrow F7. Thus, a dynamic coupling, as well as geometric, of the end part 12 of the gripping arm 11 with the anchoring flange 5 of the anchoring support 4 is obtained. By reaction the sanitary bowl 2 is pressed against the mounting wall thus determining its locking by friction. In this way the bowl, thus fixed to the wall according to the invention, has the advantage of being capable of withstanding even high loads.

From the above it is understood how the invention allows to reach the intended object. In particular, the device of the invention turns out to be particularly convenient and simple to employ and allows a precise and rapid installation of a suspended sanitary bowl.

Although the invention has been described and illustrated in relation to a preferred embodiment thereof, it is clear that it is susceptible to numerous modifications and variants that are within the reach of a skilled in the art and that for this reason fall within the scope of the appended claims.

## Claims

1. A wall fastening device (1) for a suspended sanitary bowl (2), comprising:
- a frame (3) adapted to be installed on said sanitary bowl (2),
- an anchoring support (4) adapted to be wall-mounted,
- a pair of gripping arms (11) connected to said frame (3) and reversibly movable from a release position to a gripping position, in which each of said gripping arms (11) is anchored to said anchoring support (4) to wall-fix said sanitary bowl (2), and
- a pair of actuators (13) to determine a reversible displacement of said gripping arms (11) from said release position to said gripping position of said anchoring support (4), in which said actuators (13) are each constituted by a mechanism with a screw (14) and a threaded nut (16), in which said threaded nut (16) is operatively interconnected with a corresponding gripping arm (11) and is configured to impart to said gripping arm (11) a reversible displacement along its longitudinal axis upon action of said screw (14),
**characterized in that** said threaded nut (16) is operatively interconnected with an opening (17) in a corresponding gripping arm (11) and is equipped with inclined surfaces (18, 19) suitable to slide in contact with opposite beveled edges (20, 21) of said opening (17) to impart to said gripping arm (11) a forward and backward displacement along the direction of its longitudinal axis upon action of said screw (14).

2. The device according to claim 1, **characterized in that** said wall-mounted anchoring support (4) has an anchoring element (5) projecting from the mounting wall and each of said gripping arms (11) has an end part (12) configured to be able to couple with said anchoring element (5).

3. The device according to claim 1, **characterized in that** said frame (3) is equipped with guide surfaces (22) and each gripping arm (11) is equipped with projections (23) cooperating with said guide surfaces (22) to determine a coupling rotation and, respectively, a decoupling rotation of said gripping arm (11) with the anchoring support (4).

4. The device according to claim 2, **characterized in that** said end part (12) of the gripping arms (11) is bent substantially in an inverted "L" to be able to engage to said anchoring element (5) of the anchoring support (4).

5. The device according to claim 2, **characterized in that** said anchoring support (4) is configured as a shaped plate and said anchoring element (5) is configured as a flange projecting from said shaped plate.

6. The device according to claim 3, **characterized in that** said plate-shaped anchoring support (4) is provided with slots (6) suitable to receive appropriate fastening screws (7) to firmly fix said anchoring support (4) to a mounting wall of said sanitary bowl (2) and to compensate possible variations of the center-to-center distance between said fastening screws (7).

7. The device according to claim 1, **characterized in that** said sanitary bowl (2) is provided with holes (15) suitable to receive a tool to actuate the screw (14) of said screw-threaded nut mechanism (14, 16).

8. The device according to claim 3, **characterized in that** said anchoring support (4) has an undercut (9) adapted to allow the connection with a water inlet tube and a washing conduit of said sanitary bowl (2).

9. A suspended sanitary bowl, **characterized by** the fact of being provided with the wall fastening device according to one or more of the preceding claims.

## Patentansprüche

1. Wandbefestigungsvorrichtung (1) für einen hängenden Sanitärbecken (2), umfassend:
- einen Rahmen (3), zur Montage auf dem Sanitärbecken (2) geeignet,
- eine Verankerungshalterung (4), zur Wandmontage geeignet,
- ein Paar Greifarme (11), die mit dem Rahmen (3) verbunden und reversibel von einer Auslöseposition in eine Greifposition beweglich sind, wobei jeder der Greifarme (11) an der Verankerungshalterung (4) verankert ist, um den Sanitärbecken (2) an der Wand zu befestigen, und
- ein Paar Aktuatoren (13) zur Bestimmung einer reversiblen Bewegung der Greifarme (11) von der Auslöseposition zur Greifposition der Verankerungshalterung (4), wobei jeder der Aktuatoren (13) von einem Mechanismus mit einer Schraube (14) und einer Gewindemutter (16) gebildet ist, wobei die Gewindemutter (16) mit einem entsprechenden Greifarm (14) betrieblich verbunden und derart konfiguriert ist, um diesem Greifarm (11) eine reversible Verlagerung längs seiner Längsachse bei Wirkung der Schraube (14) zu verleihen,
**dadurch gekennzeichnet, dass** die Gewindemutter (16) mit einer Öffnung (17) in einem entsprechenden Greifarm (11) betrieblich verbunden und mit geneigten Fläche (18, 19) ausgestattet ist, die geeignet sind, um mit gegenüberliegenden abgeschrägten Kanten (20, 21) der Öffnung (17) gleiten zu können, so dass sie zum Greifarm (11 eine Verschiebung nach vorne und nach hinten längs seiner Längsachse bei Wirkung der Schraube (14) zu verleihen.

2. Vorrichtung nach Anspruch 1, **dadurch gekennzeichnet, dass** die wandmontierte Verankerungshalterung (4) ein von der Montagewand abstehendes Verankerungselement (5) aufweist und jeder der Greifarme (11) einen Endabschnitt (12) besitzt, der so konfiguriert ist, dass er mit dem Verankerungselement (5) gekoppelt werden kann.

3. Vorrichtung nach Anspruch 1, **dadurch gekennzeichnet, dass** der Rahmen (3) mit Führungsflächen (22) versehen ist und jeder Greifarm (11) mit Vorsprüngen (23) versehen ist, die mit den Führungsflächen (22) zusammenwirken, um eine Kopplungs- bzw. Entkopplungsdrehung des Greifarms (11) mit der Verankerungshalterung (4) zu bewirken.

4. Vorrichtung nach Anspruch 2, **dadurch gekennzeichnet, dass** der Endteil (12) der Greifarme (11) im Wesentlichen zu einer umgekehrten "L"-Form gebogen ist, um sich in das Verankerungselement (5) der Verankerungshalterung (4) einhaken zu können.

5. Vorrichtung nach Anspruch 2, **dadurch gekennzeichnet, dass** die Verankerungshalterung (4) als geformte Platte ausgebildet ist und das Verankerungselement (5) als ein von der geformten Platte abstehender Flansch ausgebildet ist.

6. Vorrichtung nach Anspruch 3, **dadurch gekennzeichnet, dass** die plattenartige Verankerungshalterung (4) mit Schlitzen (6) versehen ist, die zur Aufnahme angepasster Befestigungsschrauben (7) geeignet sind, um die Verankerungshalterung (4) fest an einer Montagewand des Sanitärbeckens (2) zu befestigen und etwaige Abweichungen im Mittenabstand zwischen den Befestigungsschrauben (7) auszugleichen.

7. Vorrichtung nach Anspruch 1, **dadurch gekennzeichnet, dass** der Sanitärbecken (2) mit Löchern (15) versehen ist, die zur Aufnahme eines Werkzeugs zum Betätigen der Schraube (14) des Schrauben-Mutter-Mechanismus (14, 16) geeignet sind.

8. Vorrichtung nach Anspruch 3, **dadurch gekennzeichnet, dass** die Verankerungshalterung (4) einen Abfluss (9) aufweist, der so ausgelegt ist, dass er den Anschluss an ein Wasserzulaufrohr und ein Spülrohr des Sanitärbeckens (2) ermöglicht.

9. Hängender Sanitärbecken, **dadurch gekennzeichnet, dass** er mit einer Wandbefestigungsvorrichtung gemäß einem oder mehreren der vorhergehenden Ansprüche ausgestattet ist.

## Revendications

1. Dispositif de fixation murale (1) pour cuvettes de toilettes suspendues (2), comprenant :
- un cadre (3) adapté pour être installé sur ladite cuvette de toilettes (2),
- un support d'ancrage (4) adapté pour être fixé au mur,
- une paire de bras de préhension (11) reliés audit cadre (3) et mobiles de manière réversible d'une position de relâchement à une position de préhension, chacun desdits bras de préhension (11) étant ancré audit support d'ancrage (4) pour fixer ladite cuvette de toilettes (2) au mur, et
- une paire d'actionneurs (13) pour déterminer un mouvement réversible desdits bras de préhension (11) de ladite position de relâchement à ladite position de préhension dudit support d'ancrage (4), dans lequel lesdits actionneurs (13) sont formés chacun d'un mécanisme avec une vis (14) et un écrou fileté (16), dans lequel ledit écrou fileté (16) est fonctionnellement interconnecté avec un bras de préhension (11) respectif et configuré pour transmettre audit bras de préhension (11) un déplacement réversible le long de son axe longitudinal sous l'action de ladite vis (14),
**caractérisé en ce que** ledit écrou fileté (16) est fonctionnellement interconnecté avec une ouverture (17) dans un bras de préhension correspondant (11) et est équipée de surfaces inclinées (18, 19) adaptées pour glisser en contact avec les bords coniques opposés (20, 21) de ladite ouverture (17) afin de transmettre audit bras de préhension (11) un mouvement d'avant en arrière le long de la direction de son axe longitudinal sous l'action de ladite vis (14).

2. Dispositif selon la revendication 1, **caractérisé en ce que** ledit support d'ancrage mural (4) comporte un élément d'ancrage (5) faisant saillie du mur de montage et que chacun desdits bras de préhension (11) comporte une partie terminale (12) configurée pour pouvoir s'accoupler avec ledit élément d'ancrage (5).

3. Dispositif selon la revendication 1, **caractérisé en ce que** ledit cadre (3) est équipé de surfaces de guidage (22) et chaque bras de préhension (11) est équipé de protubérances (23) coopérant avec lesdites surfaces de guidage (22) pour déterminer une rotation de couplage et, respectivement, une rotation de découplage dudit bras dudit bras de préhension (11) avec le support d'ancrage (4).

4. Dispositif selon la revendication 2, **caractérisé en ce que** ladite partie terminale (12) des bras de préhension (11) est sensiblement pliée en forme de « L » inversé pour pouvoir s'accrocher audit élément d'ancrage (5) du support d'ancrage (4).

5. Dispositif selon la revendication 2, **caractérisé en ce que** ledit support d'ancrage (4) est configuré comme une plaque profilée et ledit élément d'ancrage (5) est configuré comme une bride faisant saillie de ladite plaque profilée.

6. Dispositif selon la revendication 3, **caractérisé en ce que** ledit support d'ancrage en forme de plaque (4) est muni de fentes (6) adaptées pour recevoir des vis de fixation appropriées (7) afin de fixer fermement ledit support d'ancrage (4) à une paroi de montage de ladite cuvette de toilettes (2) et de compenser toute variation de la distance centre-à-centre entre lesdites vis de fixation (7).

7. Dispositif selon la revendication 1, **caractérisé en ce que** ladite cuvette de toilettes (2) est munie de trous (15) adaptés pour recevoir un outil permettant de manœuvrer la vis (14) dudit mécanisme vis-écrou fileté (14, 16).

8. Dispositif selon la revendication 3, **caractérisé en ce que** ledit support d'ancrage (4) comporte un drain (9) adapté pour permettre le raccordement à un tuyau d'arrivée d'eau et à un conduit de lavage de ladite cuvette de toilettes (2).

9. Cuvette de toilettes suspendue, **caractérisée en ce qu'**elle est équipée d'un dispositif de fixation murale selon une ou plusieurs des revendications précédentes.
